# EUROPEAN PATENT SPECIFICATION

(11) **EP 1 522 416 B1**
(45) Date of publication and mention of the grant of the patent: **19.03.2008**
(21) Application number: 04024038.4
(22) Date of filing: 08.10.2004
(51) Int. Cl.: B41M 5/00, G11B 7/24

(54) **Information medium having printable layer**
Informationsträger mit bedruckbarer Oberfläche
Support d'information avec surface imprimable

(30) Priority: 08.10.2003 JP 2003349492
(43) Date of publication of application: 13.04.2005
(73) Proprietor: FUJIFILM Corporation, Minato-ku Tokyo (JP)
(72) Inventor: Matsubaguchi, Satoshi, Odawara-shi Kanagawa (JP); Usami, Yoshihisa, Odawara-shi Kanagawa (JP)
(74) Representative: HOFFMANN EITLE

(56) References cited:
- EP-A- 1 044 823
- WO-A-99/39914
- US-A1- 2003 175 450
- US-B1- 6 214 458
- PATENT ABSTRACTS OF JAPAN vol. 1997, no. 04, 30 April 1997 (1997-04-30) & JP 08 318671 A (DAINIPPON PRINTING CO LTD), 3 December 1996 (1996-12-03)
- PATENT ABSTRACTS OF JAPAN vol. 2002, no. 12, 12 December 2002 (2002-12-12) & JP 2002 245671 A (TAIYO YUDEN CO LTD), 30 August 2002 (2002-08-30)

## Description

### BACKGROUD OF THE INVENTION

### 1. Field of the Invention

The present invention relates to an information medium having a printable layer onto which characters or pictures can be printed.

### 2. Description of the Related Art

Standard information media widely received by the market are Compact Disks (CDs) and Digital Versatile Disks (DVDs).

CDs include read-only CD-ROMs, recordable CD-Rs capable of recording information once only, and rewritable CD-RWs capable of rewriting information multiple times.

CD-ROMs, for example, have a transparent substrate with a diameter of 120 mm and a thickness of 1.2 mm, onto which rows of pits are formed with a track pitch of 1.6 µm, providing a recording capacity of about 650 Mbytes, and information is reproduced therefrom by setting the linear velocity at 1.2 to 1.4 m/s and irradiating a laser beam of a wavelength in the range of 770 to 790 nm.

Similarly, DVDs include DVD-ROMs, DVD-Rs and DVD-RWs that correspond to the different types of CDs.

DVD-ROMs, whose recording density is about 6 to 8 times higher than that of CDs, have two substrates bonded together, the thickness of each being about 0.6 mm. Onto which rows of pits are formed with a track pitch of 0.74 µm and information is reproduced therefrom by setting the linear velocity at 3.5 m/s and irradiating a laser beam of a wavelength in the range of 635 to 650 nm.

Recently, there has been developed information media for CDs or DVDs, in which a printable layer is formed on the side opposite to the side for information rereproduction, allowing the printing of an image by means of an inkjet printer (e.g., JP-A No. 2002-245671). For the printable layer of an information medium generally UV-hardening resins are used. However, there is a problem with such printable layers made of UV-hardening resins in that they are not able to provide images of high quality, when compared with inkjet recording sheets.

EP-A-1 044 823 is directed to an ink jet recording sheet having a support and an ink absorption layer provided on the support, wherein the center line average roughness (Ra) is 0.8 to 4.0 µm.

Furthermore, when a printable layer made of a UV-hardening resin is formed having a large thickness, it is necessary to increase the energy supplied for the UV-hardening process, which often leads to the problem of disk warping or disk surface deflection. As a result, it is necessary to keep the thickness of the printable layer thin. This in turn results in an absorption capacity insufficient to absorb all ink droplets, causing a problem with the stability of printed images against bleed.

As such, it is necessary to make the ink-receiving layer thick in order to ensure the stability of printed images against bleed. However, for thick substrates such as light-transmitting resin substrates used in CDs, DVDs or the like, when the thickness of the ink-receiving layer is increased, the stress on the coating becomes considerable during the drying process, resulting in the formation of cracks.

Moreover, UV-hardening resins are irritating to the skin and thus there is a problem concerning the safety of the materials. Further, UV-hardening resins have a short shelf-life and they need to be stored in dark rooms at normal temperature. They also have an unpleasant odor which leads to problems with handling and a poor work environment.

The present invention is provided in the light of the many problems faced by the conventional information media and provides the following.

The invention provides an information medium having a printable layer, which can be handled safely, causes less bleed, and is capable of being printed with images of high quality.

### SUMMARY OF THE INVENTION

The first aspect of the present invention is to provide an information medium having a printable layer comprising at least a base layer and an ink-receiving layer adjacent to the base layer, characterized in that: the surface roughness average Ra at the surface of the base layer is 0.05 µm or greater; and, the ink-receiving layer is formed by thermally hardening a composition containing a cation-modified acrylic copolymer, a polyvinylacetal resin, an epoxy compound and hydrophobic fine particles, the thickness of the ink-receiving layer being 30 µm to 60 µm.

### DETAILED DESCRIPTION OF THE INVENTION

The information medium according to the present invention is an information medium having a printable layer comprising at least a base layer and an ink-receiving layer adjacent to the base layer. The printable layer is characterized in that: the surface roughness average Ra at the surface of the base layer is about 0.05 µm or greater; the ink-receiving layer is formed by thermally hardening a composition containing a cation-modified acrylic copolymer, a polyvinylacetal resin, an epoxy compound and hydrophobic fine particles; and the thickness of the ink-receiving layer being about 30 µm to 60 µm.

The information medium of the invention can have applications in magnetic media, optical media, semiconductor media or the like. It may be in the form of a disk, a tape or a cartridge magazine. In the case that the medium is in the form of the cartridge magazine, it is preferably removable. Particularly preferred is an optical information-recording medium in the form of a disk (optical disk).

In the case of being an optical disk, the medium may be any among a CD, a DVD, an optical disk recordable and reproducible by a violet laser, or the like.

In case the medium is a medium recordable with a violet laser, it may be any of: a bonded type, such as DVDs; and, a type in which a recording layer and a cover layer are formed on a 1.1 mm thick substrate, such that a laser beam is irradiated from the cover layer side.

The printable layer is basically formed on the opposite side to the side on which the laser beam is incident, although the printable layer may also be formed on the side on which the laser beam is incident in areas excluding the incident area.

The information medium of the invention is applicable to ROM, rewritable and recordable types, the recordable type being particularly preferred.

### <Printable layer>

The information medium of the invention has a printable layer comprising at least the base layer and the ink-receiving layer adjacent to the base layer. Now, the respective layers of the printable layer will be explained.

### [Ink-receiving layer]

The ink-receiving layer according to the invention is a layer for receiving ink, which is formed by thermally hardening a composition comprising a cation-modified acrylic copolymer, a polyvinylacetal resin, an epoxy compound and hydrophobic fine particles. As such it can have good ink dyeing properties and wettability, together with waterproofness.

### (Fine particles)

For the hydrophobic fine particles, for example, suitable examples which can be given are fine particles composed of: the vinyl resins of polymethyl methacrylate, polystyrene, and fluorine-contained resin; polyolefin resins such as polyethylene, polypropylene, and the like; thermoplastic resins such as polyamide and the lide; polybenzoguanamine resin; or thermosetting resins such as urea resin and the like. In the case of hydrophobic acrylic polymer, it is preferred that at least an alkyl (meth)acrylate is included in the monomer component of the acrylic polymer.

These fine particles have preferably an average particle size of about 0.1 to 50 µm and more preferably about 0.1 to 20 µm.

The fine particles are preferably contained in an amount of about 0.1 to 20% by mass, with respect to the total solid content in the ink-receiving layer. By maintaining the content of the fine particles within this range, sufficient transport and anti-blocking properties can be obtained.

Further, the fine particles used in the invention may be inorganic fine particles. The inorganic fine particles may include, for example: silica, clay, calcium carbonate, barium sulfate, alumina white, aluminum hydroxide, talc, bentonite, titanium oxide and the like; white carbons such as anhydrous silicic acid known as colloidal silica, hydrated silicic acid, hydrated calcium silicate, and hydrated aluminum silicate; alumina sol and the like. The size of the particles being typically about 10 to 300 nm. Using these inorganic fine particles, images of high quality can be formed by suitably diffusing the ink printed on the ink-receiving layer. These inorganic fine particles are preferably contained in an amount of about 5 to 90% by mass with respect to the total solid content of the ink-receiving layer.

### (Cation-modified acrylic copolymer)

For the cation-modified acrylic copolymer, the monomer components constituting the copolymer preferably contain at least one of methyl methacrylate, ethyl acrylate or a quaternary ammonium salt of dialkylaminoethyl methacrylate.

Particularly preferred is an acrylic monomer having a quaternary ammonium base in the cation-modified moiety. In the case of a group for reacting with an epoxy group, preferred are acrylic monomers having a functional group such as a hydroxyl group or the like in the cation-modified moiety. Also it is preferable to use hydrophobic monomers comprising (meth)acrylic esters or the like, as the moiety rendering hydrophobicity.

As the acrylic monomer having a quaternary ammonium base, Suitable examples which can be given are monomers prepared by quaternizing (meth)acrylic ester monomers having a tertiary amino group, such as: dimethylaminoethyl (meth)acrylate, diethylamino (meth)acrylate, diethanolamino (meth)acrylate, dipropylamino (meth)acrylate, dipropanolamino (meth)acrylate and dibutylamino (meth)acrylate and the like. Specifically, the example can be given of a quaternary ammonium salt of dialkylaminoethyl methacrylate.

Further, as the acrylic monomer having the quaternary ammonium base, examples can be given of monomers prepared by reacting: monomers having functional groups such as a carboxyl group and a hydroxyl group, such as acrylic acid, methacrylic acid, or mono(meth)acrylate and the like prepared from these acids with glycols such as ethylene glycol and the like; with a reactive quaternary ammonium salt such as glycidyltrimethylammonium chloride, 3-chloro-2-hydroxypropyltrimethylammonium chloride, 3-chloro-2-hydroxypropyltriethanolammonium chloride, glycidyldimethylbenzylammonium chloride, and glycidyldimethylbutylammonium chloride and the like.

Meanwhile, as the acrylic monomer having a group reacting with an epoxy group, examples can be given of monomers: having a carboxyl group, such as acrylic acid and methacrylic acid; esterification products of these monomers with polyhydric alcohols such as ethylene glycol, propylene glycol, glycerin, and pentaerythritol and the like; amidation products of these monomers with polyamines such as ethylenediamine and propylenediamine and the like; acrylamide, methacrylamide and the like.

The hydrophobic monomers comprising a (meth)acrylic ester and the like, may include, for example: (meth)acrylic esters such as methyl (meth)acrylate, ethyl (meth)acrylate, propyl (meth)acrylate, butyl (meth) acrylate and the like; or monomers such as acrylamide, acrylonitrile, vinyl acetate, vinyl chloride, styrene and the like.

### (Polyvinylacetal resin)

For the polyvinylacetal resin, the resin resulting from acetalization of a polyvinyl alcohol having a degree of saponification of 70 to 90%, to a degree of 5 to 40 mol% is preferred. When the degree of saponification of polyvinyl alcohol is 70 to 90%, sufficient ink absorbability is obtained, and when the degree of acetalization of polyvinyl alcohol is 5 to 40 mol%, excellent waterproofness and ink absobability is obtained.

According to the invention, the acetal moiety of the polyvinylacetal resin is not particularly limited, but it is preferably any one of formal, methylal, ethylal, propal or butyral from the aspect of suitability for inkjet recording.

### (Epoxy compound)

The epoxy compound takes the role of hardening the cation-modified acrylic copolymer and the polyvinylacetal resin. For such an epoxy compound, preferred are water-soluble aliphatic compounds, which are at least bifunctional and have two or more epoxy groups. As such an epoxy compound, examples which can be given are: polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, and polypropylene glycol diglycidyl ether.

The cation-modified acrylic copolymer, polyvinylacetal resin (main agent), epoxy compound (hardening agent) and fine particles, as described above, are all used in the form of a coating solution (composition) for the ink-receiving layer, 10 to 50 % by mass mixed in one, two or more solvents selected from water, methanol, ethanol, isopropyl alcohol, acetone, methyl ethyl ketone, methyl isobutyl ketone, ethyl acetate, toluene, xylene or the like. When used, the main agent and the hardening agent are mixed at an equivalent ratio of about 1/0 to 1/2, and the mixture is suitably diluted, as necessary.

Furthermore, according to the purpose the ink-receiving layer may have, in addition to the above compounds, other resins, or surfactants, UV-absorbing agents, antioxidants, pH-adjusting agents, antifoamers or other additives appropriately incorporated to the extent that there is no deviation from the performance.

According to the invention, the thickness of the ink-receiving layer is about 30 µm to 60 µm. With the thickness of the ink-receiving layer set within this range, an absorption capacity sufficient to absorb all of the ink droplets can be obtained, resulting in attenuation of bleed and thus enabling high quality printing.

When the thickness of the ink-receiving layer is less than 30 µm, an absorption capacity sufficient to absorb all ink droplets cannot be obtained, resulting in bleed. When the thickness is greater than 60 µm, there is deterioration in mechanical properties such as warping or surface deflection of the information medium.

As such, although the thickness of the ink-receiving layer according to the invention is about 30 µm to 60 µm, it is preferably about 35 µm to 55 µm, and more preferably about 35 µm to 50 µm.

In order to maintain the thickness of the ink-receiving layer from 30 µm to 60 µm, the coating amount of the coating solution for the ink-receiving layer may be appropriately set such that the dry film thickness of the ink-receiving layer is within the range.

Application of the coating solution for the ink-receiving layer may be carried out, for example, by contact coating such as bar coating, roll coating, blade coating, screen coating, and pad coating and the like, or non-contact coating such as spray coating, spin coating, curtain coating, and dip coating.

When the coating solution is applied by spray coating, the pressure is preferably about 1.013 to 2026 hPa, more preferably about 50.65 to 1013 hPa, and even more preferably about 101.3 to 506.5 hPa. The spread angle of the spray is preferably about about 1° to 120°, more preferably about 10° to 60°, and even more preferably about 20°to 50°. The particle size of the droplet is preferably about 0.1 to 1000 µm, more preferably about 1 to 500 µm, and even more preferably about 10 to 100 µm. The distance from the work piece (information medium) is preferably about about 1 to 1000 mm, more preferably about 10 to 200 mm, and even more preferably about 30 to 100 mm. The temperature is preferably about 10 to 40°C, more preferably about 15 to 35°C, and even more preferably about 20 to 30°C. The humidity is preferably about 5 to 70% RH, more preferably about 10 to 40% RH, and even more preferably about 20 to 50% RH.

In case the coating solution is applied by spin coating, the viscosity of the coating solution is preferably about 0.1 to 10,000 mPa.s, more preferably 1 to 6000 mPa.s, and even more preferably 10 to 3000 mPa.s. The rotation number during dispensing is about 10 to 1000 rpm, more preferably about 50 to 600 rpm, and even more preferably about 100 to 400 rpm. During shaking off , the rotation number is gradually increased, and the increasing operation may be stepwise or gradual. Specifically, the rate is preferably about 100 to 10000 rpm, more preferably about 200 to 5000 rpm, and even more preferably about 300 to 3000 rpm. The shape of the nozzle is preferably about 1 to 100 mm in length, more preferably about 5 to 50 mm, and even more preferably about 10 to 30 mm. The inner diameter of the nozzle is preferably about 0.1 to 5 mm, more preferably about 0.3 to 3 mm, and even more preferably about 0.5 to 2 mm. The wall thickness of the nozzle is preferably about about 0.1 to 1 mm and more preferably about 0.2 to 0.5 mm. Also, the nozzle may be installed obliquely to the flow. The distance from the work piece is preferably about 0.5 to 100 mm, more preferably about 1 to 50 mm, and even more preferably about 2 to 20 mm. The temperature is preferably 10 to 40°C, more preferably 15 to 35°C, and even more preferably 20 to 30°C. The humidity is preferably about 5 to 70% RH, more preferably about 10 to 40% RH, and even more preferably about 20 to 50% RH.

As described above, the coating solution for the ink-receiving layer is applied and then thermally hardened by heating. The process of heating is preferably carried out at about 0 to 90°C for about 1 to 180 minutes, and more preferably at about 5 to 80°C for about 2 to 100 minutes. For the heating means, a variety of conventional means can be employed. Examples include heating in an oven, heating by warm air machine, heating by IR radiation and the like.

In order to dry the applied coating solution, for the ink-receiving layer as described above, any drying means may be employed. Examples are natural drying, hot air drying, IR/Far-IR drying, microwave drying, oven drying, blowing and heating under low temperature and low humidity or the like.

In the case of natural drying, the time for drying is preferably about 1 to 10,000 minutes, more preferably about 5 to 1000 minutes, and even more preferably about 10 to 200 minutes. The temperature for drying is preferably about 0 to 40°C, more preferably about 10 to 35°C, and even more preferably about 20 to 30°C. The humidity for drying is preferably about 10 to 70% RH, more preferably about 20 to 60% RH, and even more preferably about 30 to 50% RH.

In the case of hot air drying, the time for drying is preferably about 0.1 to 5000 seconds, more preferably about 1 to 1000 seconds, and even more preferably about 10 to 500 seconds. The temperature for drying is preferably about 40 to 200°C, more preferably about 60 to 150°C, and even more preferably about 80 to 130°C. The humidity for drying is preferably about 0.01 to 50% RH, more preferably about 0.1 to 30% RH, and even more preferably about 1 to 20% RH.

In the case of IR/Far-IR drying, the time for drying is preferably about 1 to 2000 seconds, more preferably about 10 to 1000 seconds, and even more preferably about 30 to 500 seconds. The output power is preferably about 10 to 2000 W, more preferably about 50 to 1500 W, and even more about 100 to 1000 W.

Drying conditions in the case of microwave drying are the same as those in the case of IR/Far-IR drying.

In the oven drying, the time for drying is about 1 to 2000 seconds, more preferably about 10 to 1000 seconds, and even more preferably about 30 to 500 seconds. In the case of blow drying under low temperature and low humidity, the temperature and humidity are preferably about 0 to 25°C and about 0 to 20% RH, and more preferably about 5 to 15°C and about 5 to 15% RH.

After the ink-receiving layer is formed on the base layer, this ink-receiving layer can be subjected to calendaring, for example, supercalendar, gloss calendar or the like. This is done by passing the layer between roll nips under high temperature and high pressure and can improve the surface smoothness, glossiness, transparency and the coating strength. However, since this calendaring process may cause a decrease in the porosity (i.e., since ink absorption may be lowered), it is necessary to carry out the process under conditions which minimize the decrease in porosity.

When performing the calendaring process, the roll temperature is preferably about 30 to 150°C and more preferably about 40 to 100°C.

Further, the linear pressure between the rolls during the calendaring process is preferably about 50 to 400 kg/cm and more preferably about 100 to 200 kg/cm.

In addition, the pore size of the ink-receiving layer preferably has a median diameter of about 0.005 to 0.030 µm and more preferably about 0.01 to 0.025 µm.

The porosity and the median diameter of pores can be measured using a mercury porosimeter (trade name: PORESIZER-9320-PC2, product of Shimadzu Corporation).

Moreover, it is preferred that the ink-receiving layer has high transparency, and as a reference, the haze value obtained when the ink-receiving layer is formed on a transparent film support is preferably about 30% or less and more preferably about 20% or less.

This haze value can be measured using a haze meter (HGM-2DP: Suga Test Instruments Co., Ltd.).

The ink-receiving layer of the information medium of the invention can improve the recording properties, such as jitter, since it is possible to reduce the dose of UV rays radiated to the information medium, unlike the ones formed from UV-hardened resins. Further, since it is not irritating to the skin, unlike the UV-hardened resins, it is highly safe to handle.

Although inkjet recording sheets show defects such as cracks in the surface when bent with large forces, the information medium of the invention has a thicker substrate than those of inkjet recording sheets and is highly resistant to external stresses such as bending.

### <Base layer>

When a base layer having high opacity is provided, a diffusibility close to that of paper can be obtained, and the quality of images is improved. Especially, when a white base layer is provided, good color reproducibility can be obtained. If a base layer having high glossiness is used, the images have the finish of glossy photographs, and if a base layer having a high matt property is used, the images have the finish of matt photographs. When base layers of various colors are used, various impressions of images can be formed. Further, when a fluorescent base layer is used, a fluorescent quality of image can be obtained. Although the means for formation of these base layers are not limited, it is preferable, from the prospective of productivity, to form a layer of radiation-hardened resin by means of screen printing. A radiation-hardened resin is a resin that is hardened by electromagnetic waves such as UV-rays, electron beams, X-rays, γ-rays, and IR-rays. It is preferred to use UV-rays and electron beams for the radiation.

According to the invention, the surface roughness Ra of the base layer is relatively rough at a value of about 0.05 µm or greater. By having the surface roughness Ra of the base layer to be 0.05 µm or greater, adhesion between the base layer and the ink-receiving layer increases, and formation of cracks can be prevented. The surface roughness Ra of the base layer is preferably about 0.1 µm or greater, and more preferably about 0.2 µm or greater. The upper limit of the base layer is preferably 1 µm.

In the context of the invention, the "surface roughness" means the average roughness of the central surface (Ra).

It is desirable, in the case of using a UV-hardened resin, to set the viscosity and the conditions for hardening appropriately in order to make the surface roughness Ra of the base layer to be 0.05 µm or greater.

The thickness of the base layer is preferably 0.1 to 100 µm, more preferably 1 to 50 µm, and most preferably 3 to 20 µm.

According to the invention, it is preferable to have the base layer composed of two or more layers comprising: a smoothing layer, to adjust the glossiness of the printable layer; and a chromaticity-adjusting layer, to adjust the chromaticity of the printable layer. As such, by making the base layer multi-layered, in two or more layers, and distributing the function for adjusting the glossiness of the printable layer to one layer (smoothing layer) and for adjusting the chromaticity to one layer (chromaticity-adjusting layer) appropriate chromaticity and glossiness can be obtained, leading to a printable layer with high quality images. Further, the presence of such a base layer allows enhancement of the photographic image quality to a level similar to that of photographic paper. In addition, the laminating order of the smoothing layer and the chromaticity-adjusting layer is not important.

For the base layer, specifically in the L*a*b* color coordinates according to JIS Z 8729, it is desirable to have a* in the range of -4 < a* < 4 and b* in the range of -6 < b* < 3. When the chromaticity of the base layer is maintained within the ranges, whiteness increases, and a printable layer with high image quality can be obtained. The L* value is more preferably 91 or greater and even more preferably 92 or greater. The upper limit of L* is 100. Further, a* is preferably -2 < a* < 2 and more preferably -1 < a* < 1, while b* is preferably -5 < b* <2 and more preferably -4 < b* < 1.

The glossiness of the smoothing layer at 45° is preferably 30% or greater, more preferably 35% or greater, and even more preferably 40% to 90%. This glossiness can be measured using a digital glossimeter (GD-45D, product of Suga Test Instruments Co., Ltd.) and the like.

It is desirable to choose the material constituting the smoothing layer appropriately in order to maintain the glossiness of the smoothing layer at 45° to be 30% or more. Specifically, in the case where a UV-hardening resin is used as the material for the smoothing layer, examples of material may be given such as inks with low viscosity and excellent leveling performance.

Maintaining the values for a* and b* of the chromaticity-adjusting layer within the ranges can be done by adding, for example, an indigo ink, a purple ink or mixtures thereof.

The thickness of the smoothing layer is preferably about 3 to 30 µm, more preferably about 6 to 20 µm, and even more preferably about 8 to 13 µm. Further, the thickness of the chromaticity-adjusting layer is preferably about 3 to 30 µm, more preferably about 6 to 20 µm, and even more preferably about 8 to 13 µm.

When the base layer is constituted from two or more layers comprising a smoothing layer and a chromaticity-adjusting layer, the total thickness of the base layer is preferably about 6 to 60 µm, more preferably about 12 to 40 µm, and even more preferably about 16 to 26 µm.

Although the thickness of the base layer is preferably 0.1 to 100 µm as described above, it is preferable to have the thickness to be about 15 µm or greater in the invention. As such, by making the thickness of the base layer about 15 µm or greater, high smoothness and thus high glossiness can be obtained. More specifically, the gloss at 45° of 30% or greater can be obtained.

As such, in order to obtain high smoothness of the base layer, the layer thickness is preferably about 20 µm or greater and more preferably about 25 µm or greater.

Although the means of formation of such a base layer is not limited, it is preferable, from the perspective of productivity, to form it using a layer of radiation-curable resin by screen printing. A radiation-curable resin is a resin hardened by electromagnetic wave such as UV-rays, electron beams, X-rays, γ-rays, IR-rays and the like. Amongst these UV-rays or electron beams are preferable. Further, in order to maintain the thickness of the base layer at 15 µm or greater, it is desirable to form the total layer thickness 15 µm or greater by a process of repeated steps of screen-printing and radiation curing. In other words, layers with a thickness of less than 15 µm may be multi-superimposed to form a layer with a thickness of 15 µm or greater.

### <Intermediate layer>

The information medium of the invention may have an intermediate layer provided between the substrate and the base layer. In this case, the adhesion between the base layer and the substrate may be improved, or the warping tendency of the information medium as a whole may be adjusted.

The thickness of the intermediate layer is preferably about 0.1 to 100 µm, more preferably about 1 to 50 µm, and even more preferably about 3 to 20 µm.

### <Surface layer>

The information medium of the invention may have a surface layer on the ink-receiving layer. This surface layer can improve the surface strength or improve the preservation of printed images. The surface layer is required to have the properties of receiving ink or transmitting it rapidly.

The thickness of the surface layer is preferably about 0.01 to 100 µm, more preferably about 0.1 to 10 µm, and even more preferably 0.5 to 5 µm.

Now, the substrate and each layer used in the invention will be explained. Further, the layer composition, materials and the like are given as examples for illustration only, and the invention is not limited to these.

### <Substrate>

For the substrate, any among a variety of materials conventionally used as substrate materials for optical recording medium can be selected and used.

Specific examples which can be given are: glass; polycarbonate; acrylic resins such as polymethyl methacrylate and the like; vinyl chloride resins such as polyvinyl chloride and vinyl chloride copolymer and the like; epoxy resins; amorphous polyolefin; polyester; metals such as aluminum and the like. These and other like materials may be used in combination, if desired.

Among the materials, amorphous polyolefin and polycarbonate are preferred in terms of factors like resistance to humidity, dimensional stability, low cost and the like, polycarbonate being especially preferred. Further, the thickness of the substrate is preferably about 0.5 to 1.2 mm and more preferably about 0.6 to 1.1 mm.

On the substrate, concavo-convex undulations (pre-grooves) representing guiding grooves for tracking, or information such as address signals and the like are formed.

In the case of a medium for recording by a violet laser, the track pitch of the pre-grooves is preferably about 200 to 800 nm, more preferably about 200 to 500 nm, and even more preferably about 200 to 400 nm.

Further, the depth of the pre-grooves (groove depth) is preferably about 10 to 180 nm and more preferably about 20 to 150 nm.

Furthermore, the half-width of the pre-grooves is preferably about 200 to 400 nm, more preferably about 230 to 380 nm and even more preferably about 250 to 350 nm.

In the case of DVD-Rs or DVD-RWs, the track pitch of the pre-grooves is preferably about 300 to 900 nm, more preferably about 350 to 850 nm, and even more preferably about 400 to 800 nm.

Further, the depth of the pre-grooves (groove depth) is preferably about 100 to 160 nm, more preferably about 120 to 150 nm and even more preferably about 130 to 140 nm.

Furthermore, the half-width of the pre-grooves is preferably about 200 to 400 nm, more preferably about 230 to 380 nm and even more preferably about 250 to 350 nm.

In the case of CD-Rs or CD-RWs, the track pitch of the pre-grooves is preferably in the range of about 1.2 to 2.0 µm, more preferably about 1.4 to 1.8 µm and even more preferably about 1.55 to 1.65 µm.

Further, the depth of the pre-grooves (groove depth) is preferably about 100 to 250 nm, more preferably about 150 to 230 nm and even more preferably about 170 to 210 nm.

Furthermore, the half-width of the pre-grooves is preferably about 400 to 650 nm, more preferably about 480 to 600 nm and even more preferably about 500 to 580 nm.

### <Recording layer>

In the case of CD-Rs or DVD-Rs, the recording layer is formed by dissolving dyes, which are the recording substance, with binders and the like in a suitable solvent to prepare a coating solution. Then, to form the coating film applying by spin coating this coating solution onto the surface of the substrate on which pre-grooves have been formed, followed by drying.

The temperature for the operation of spin coating is preferably not lower than 23°C and more preferably not lower than 25°C. There is no upper limit for the temperature in particular, but since the temperature should necessarily be kept below the ignition temperature of the solvent, the upper limit is preferably 35°C.

When the temperature is below 23°C, drying of the solvent may be retarded, the desired thickness of the dye film (thickness of the recording layer) may not be obtained, or the time taken for drying the coating may be extended, lowering productivity.

For the dye, examples which can be given are cyanine dyes, oxonol dyes, metal complex dyes, azo dyes, phthalocyanine dyes and the like, among which phthalocyanine dyes are preferred.

Further, dyes described in JP-A Nos. 4-74690, 8-127174, 11-53758, 11-334204, 11-334205, 11-334206, 11-334207, 2000-43423, 2000-108513, and 2000-158818 are also suitable for use.

For the solvent of the coating solution, examples which can be given are: esters such as butyl acetate, ethyl lactate, and 2-methoxyethyl acetate and the like; ketones such as methyl ethyl ketone, cyclohexanone, methyl isobutyl ketone and the like; chlorinated hydrocarbon such as dichloromethane, 1,2-dichloroethane, chloroform and the like; amides such as dimethylformamide and the like; hydrocarbons such as methylcyclohexane and the like; ethers such as tetrahydrofuran, ethyl ether, and dioxane; alcohols such as ethanol, n-propanol, isopropanol, n-butanol, and diacetone alcohol; fluorine-contained solvents such as 2,2,3,3-tetrafluoropropanol and the like; and glycol ethers such as ethylene glycol monomethyl ether, ethylene glycol monoethyl ether, propylene glycol monomethyl ether and the like.

The solvents can be used alone or in combination of two or more, depending on the solubility of the recording material to be used. Further, a variety of additives such as antioxidants, UV-absorbing agents, plasticizers, and lubricants may be added to the coating solution depending on the intended use.

When binders are used, binders include, for example, natural organic high-molecular compounds such as gelatin, cellulose derivatives, dextran, rosin, rubber and the like, and synthetic organic high-molecular compounds including, for example: hydrocarbon resins such as polyethylene, polypropylene, polystyrene, polyisobutylene and the like; vinyl resins such as polyvinyl chloride, polyvinylidene chloride, polyvinyl chloride-polyvinyl acetate copolymer and the like; acrylic resins such as polymethyl acrylate , polymethyl methacrylate and the like; polyvinyl alcohol; chlorinated polyethylene; epoxy resin; butyral resin; rubber derivatives, and the initial condensate of a thermosetting resin such as phenol-formaldehyde resin and the like. In cases where the binder is used as one of the materials for the recording layer, the amount of the binder is in the range of about 0.01 to 50 fold (mass ratio) and more preferably about 0.1 to 5 fold with respect to the amount of recording substances. The concentration of the recording substance in the coating solution thus prepared is generally in the range of about 0.01 to 10% by mass and more preferably about 0.1 to 5% by mass.

For the method of coating, spin coating is applicable as described above, and with regard to the device used for spin coating any conventionally known device can be used.

Further, the recording layer may be either a single layer or a multilayer, and the film thickness of the layer is generally in the range of about 20 to 500 nm, preferably in the range of about 30 to 300 nm and even more preferably about 50 to 100 nm.

The recording layer may contain various anti-fading agents in order to improve the light-fastness of the recording layer.

For the anti-fading agents, a singlet oxygen quencher is generally used. For the singlet oxygen quencher, use can be made of those known in the art, as described in a number of publications such as patent specifications and the like.

Specific examples of such publications include Japanese patent applications such as JP-A Nos.58-175693, 59-81194, 60-18387, 60-19586, 60-19587, 60-35054, 60-36190, 60-36191, 60-44554, 60-44555, 60-44389, 60-44390, 60-54892, 60-47069, 63-209995, and4-25492, JP-BNos. 1-38680and6-26028, DE 350399, and Bulletin of The Chemical Society of Japan, 1992, October issue, p.1141 and the like.

The amount of the anti-fading agent such as the singlet oxygen quencher to be used in the invention is typically in the range of about 0.1 to 50% by mass, preferably about 0.5 to 45 by mass%, more preferably about 3 to 40% by mass, and even more preferably about 5 to 25% by mass with respect to the amount of the dyes.

In the case of CD-RWs or DVD-RWs, it is preferred that the recording layer is made of: an optical recording material of phase-changing type which can take at least two states, such as crystalline state and the non-crystalline states; and comprises Ag, Al, Te or Sb. Such a recording layer can be formed by any methods known in the art.

Furthermore, the recording layer may have, if necessary, a dielectric layer, as known in the art, formed thereon.

### <Light-reflecting layer>

After the formation of a recording layer, a light-reflecting layer is formed thereon by means of vapor deposition, sputtering or ion-plating of a light-reflecting material. During the formation of the light-reflecting layer, a mask is typically employed, which allows control of the region of formation of the light-reflecting layer.

In the light-reflecting layer, light-reflecting materials having high reflectance to the laser beam are used. The corresponding reflectance is preferably about 70% or greater.

Examples of those light-reflecting materials having high reflectance include metals and metalloids such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, Bi and the like, and stainless steel. These light-reflecting materials may be used alone or in combinations of two or more, or as alloys thereof. Preferred among them are Cr, Ni, Pt, Cu, Ag, Au, Al and stainless steel. Particularly preferred ones are Au, Ag, Al or alloys thereof, and the most preferred are Au, Ag or their alloys.

The film thickness of the light-reflecting layer is generally in the range of about 10 to 300 nm and preferably in the range of about 50 to 200 nm.

### <Protective layer and protective substrate>

After the formation of the light-reflecting layer, a protective layer is formed thereon.

This protective layer is formed by spin coating. Use of spin coating allows a protective layer to be formed without causing any damage (such as dissolution of dyes, chemical reactions between dyes and the materials of the protective layer) on the recording layer. The rotation number for spin coating is preferably about 50 to 8000 rpm and more preferably about 100 to 5000 rpm, for forming a uniform layer and preventing damage to the recording layer.

Moreover, when a radiation-curable resin (UV-hardening resin) is used in the protective layer, a protective layer is formed by spin coating, and then the radiation-curable resin is hardened by radiating UV on the protective layer by means of a UV lamp (metal halide lamp).

Further, the protective layer may be left as appropriate for a certain period of time prior to hardening the resin, in order to eliminate irregularities of thickness of the protective layer.

The protective layer prevents penetration of moisture or the formation of blemishes. As materials for constituting the protective layer, radiation-curable resins, visible light-curable resins, thermally hardening resins, silicon dioxide or the like are preferable. Further preferred among them are radiation-curable resins. These radiation-curable resins include, for example, UV-hardening resins such as "SD-640" manufactured by Dainippon Ink and Chemicals, Incorporated. Use can be also made of SD-347 (manufactured by Dainippon Ink and Chemicals, Incorporated), SD-694 (manufactured by Dainippon Ink and Chemicals, incorporated), SKCD1051 (manufactured by SKC Corporation) and the like. The thickness of the protective layer is preferably in the range of about 1 to 200 µm and more preferably in the range of about 50 to 150 µm.

Furthermore, in a construction where the protective layer is used as the laser beam path, the layer is required to have transparency. The term "transparency" herein means the layer is transparent to the extent of transmitting the recording light and reproducing light (transmittance: 90% or higher).

In the case of DVD-Rs and DVD-RWs, an adhesive layer made up of a UV-hardening resin or the like and a substrate (thickness: about 0.6 mm, the same material as the above-mentioned substrate) are laminated as a protective substrate instead of a protective layer.

That is to say, after formation of the light-reflecting layer, an adhesive layer is formed by applying a UV-hardening resin (for example, SD640 manufactured by Dainippon Ink and Chemicals, Incorporated) to a thickness of 20 to 60 µm by means of spin coating. On the thus-formed adhesive layer, for example, a polycarbonate substrate as a protective substrate (thickness: 0.6 mm) is placed and they are bonded together by hardening the UV-hardening resin by radiating ultraviolet rays on the substrate.

In this manner, an information medium consisting of a laminate having a recording layer, a light-reflecting layer, a protective layer or an adhesive layer interposed between a substrate and a protective substrate (dummy substrate) and the like is prepared.

In addition, the information medium of the invention can, by suitably selecting the track pitch of the pre-groove formed on the substrate and the material constituting the recording layer, have application as an information medium having a track pitch narrower than that of conventional DVD and the like. From such reproduction of information can be carried out using a laser beam having a wavelength smaller than that of a conventionally used laser beam.

The lower limit of the thickness of the information medium of the invention is preferably about 0.3 mm, more preferably about 0.5 mm and even more preferably about 0.7 mm. The upper limit is preferably about 100 mm, more preferably bout 20 mm and even more preferably about 5 mm. When the medium is excessively thin, defects may occur upon bending. When the medium is excessively thick, removability may be lowered.

### EXAMPLES

The present invention will now be explained with reference to Examples, but the present invention is not limited by these examples. The terms "part" and "%" in the Examples represent "parts by mass" and "% by mass", respectively.

### (Example 1)

### (Preparation of disk-shaped substrate)

A disk-shaped resin substrate of polycarbonate is prepared by injecting a polycarbonate resin (resin trade name: PANLITE AD5503 manufactured by TEIJIN CHEMICALS LTD.) and molding at a temperature of 115°C into an injection molder. The injection molding being equipped inside with a stamper, prepared to have a predetermined grooved shape with a predetermined track pitch. The disk-shaped resin substrate thus obtained has a diameter of 120 mm and thickness of 1.2 mm and has indented grooves (pre-grooves) formed in a spiral shape on the surface. The track pitch of the indented grooves is 1.6 µm, the groove width 500 nm, and the groove depth 180 nm.

2.5 g of a cyanine dye, represented by the following formula, is dissolved in 100 ml of 2, 2, 3, 3-tetrafluoropropanol to give a coating solution for forming a recording layer. This coating solution is applied on the surface of the above-obtained disk-shaped polycarbonate substrate on which the pre-grooves had been formed, by spin coating, and a dye-containing recording layer (thickness: 190 nm (the groove part), 110 nm (the land part)) is formed.

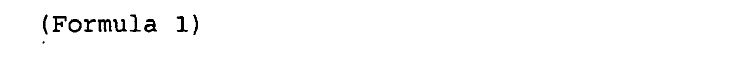

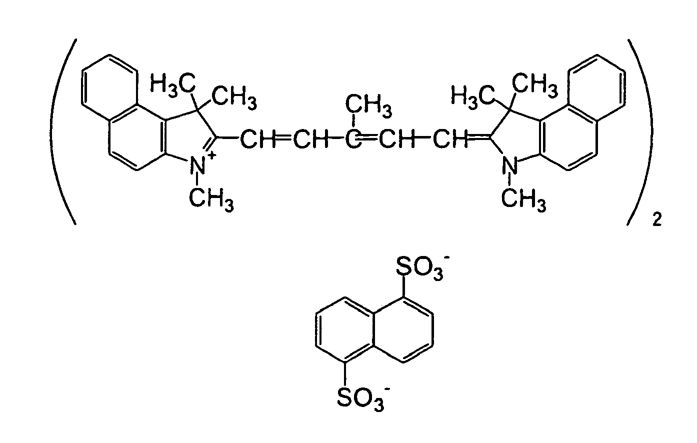

Next, a reflective layer composed of Ag with a thickness of about 120 nm is formed by sputtering Ag onto the dye-containing recording layer by means of a DC magnetron sputtering device. Also, a UV-hardening resin (trade name: SD318, manufactured by Dainippon Ink and Chemicals, Incorporated) is applied on the reflective layer by spin coating, varying the rotation number at 300 to 4000 rpm. After application, the resin is hardened by UV radiation using a high pressure mercury lamp located above the resin to form a protective layer with a thickness of 5 µm. By the process described above, an information medium (optical disk) of CD-R type consisting of a substrate, a dye-containing recording layer, a reflective layer and a protective layer is manufactured.

Next, a printable layer is formed, by the following procedure, on the protective layer, opposite to the side of incidence of the laser beam for information reproduction.

On the protective layer, on the opposite side of the substrate surface, screen printing is carried out with a UV-hardening ink (White No. 3, manufactured by Teikoku Printing Inks Mfg. Co., Ltd.). After printing, the ink is hardened by irradiation of UV with a power of 80 W/cm with a metal halide lamp. This is repeated to form a base layer (white layer) consisting of two 10 µm-thick layers, the total thickness being 20 µm. The screen used is a screen made of Tetoron, of 300 mesh /inch, with a strand diameter of 31 µm and openings of 38 µm. The surface roughness Ra of the thus formed base layer is 0.1 µm.

Next, the following procedure is performed to form an ink-receiving layer on the base layer.

A coating solution for the ink-receiving layer is prepared by adding to the blend given below, a 10% aqueous solution of 2-methylimidazole as catalyst (3 parts) and a solvent of water/isopropyl alcohol = 6/4 (mass ratio) and diluting the composition to a 20% dilution. The prepared ink-receiving coating solution is coated on the base layer by bar coating, to have a dry thickness of 30 µm, dried at 80°C for 20 minutes and thermally hardended, to yield the optical disk of Example 1 (information medium).
- Cation-modified acrylic copolymer resin 70 parts (trade name: JURYMER SP-50TF, manufactured by Nihon Junyaku Co., Ltd.)
- Polyvinylacetal resin 30 parts (trade name : S-LEC KX-1, manufactured by Sekisui Chemical Co. , Ltd.)
- Glycerol polyglycidyl ether 10 parts (trade name: DENACOL EX-314, manufactured by Nagase Chemicals Ltd.).
- Polymethyl methacrylate fine particles 10 parts (trade name: MP-1000, manufactured by Soken Chemical & Engineering Co., Ltd.)

### (Example 2)

A polycarbonate substrate (thickness: 0.6 mm, outer diameter: 120 mm; inner diameter: 15 mm, Tradename: PANLITE AD5503, manufactured by TEIJIN CHEMICALS LTD.) is prepared by injection molding, on the surface on which grooves (land) in a spiral shape, and LPP have been formed. Groove depth: 140 nm, Groove width: 310 nm and Groove pitch: 740 nm.

1 g of dye prepared by mixing the following oxonol dye (A) and oxonol dye (B) in a ratio of 65 : 35, is dissolved in 100 ml of 2,2,3,3-tetrafluoropropanol, and a coating solution for formation of a recording layer is prepared therefrom. This coating solution for the recording layer is applied to the grooved surface of the obtained substrate by spin coating, varying the rotation number at 300 to 3000 rpm, and drying to give the recording layer. The thickness of the recording layer is measured by observation by SEM of the cross-section of the layer, and is found to be 150 nm in the groove part and 110 nm in the land part.

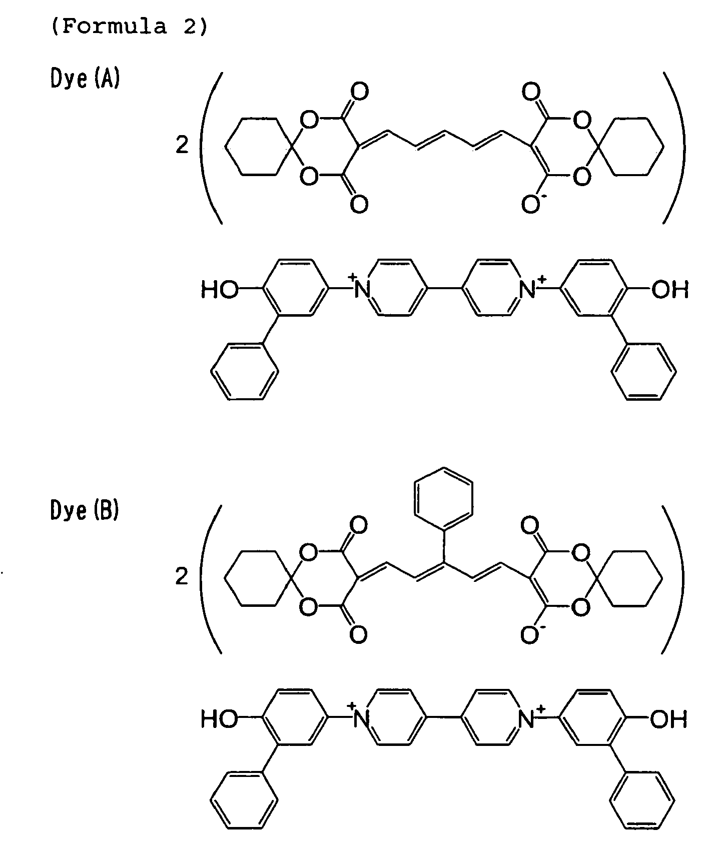

Then, a reflective layer composed of Ag, having a thickness of about 150 nm, is formed on the recording layer by DC sputtering in an argon atmosphere. The pressure in the chamber is 0.5 Pa.

Further, a UV-hardening resin (trade name: "SD-318", manufactured by Dainippon Ink and Chemicals, Incorporated) is dispensed on the reflective layer in an annular shape, and a separate disk-shaped protective substrate (diameter: 120 mm, thickness: 0.6 mm) made of polycarbonate is superimposed on the reflective layer such that the centers are aligned. The whole assembly is rotated at 5000 rpm for 3 seconds, a UV-hardening resin (SD640, manufactured by Dainippon Ink and Chemicals, Incorporated) is spread out on the entire surface, and excess UV-hardening resin is shaken off. After the UV-hardening resin is spread over the entire surface, the UV-hardening resin is hardened by UV irradiation by means of a high pressure mercury lamp, and the substrate having the recording layer and the reflective layer formed thereon are bonded with the disk-shaped protective substrate. The thickness of the bonded layers is 25 µm, and the layers can be bonded in the absence of air bubbles.

Then, a UV-hardening ink (White No. 3, Teikoku Printing inks Mfg. Co., Ltd.) is printed on the surface of the disk-shaped protective substrate by screen printing. After printing, the ink is hardened by irradiating with UV rays at 80 W/cm with a metal halide lamp. This is repeated and two base layers (white layer) are formed (a smoothing layer and a chromaticity-adjusting layer in this order), the thickness of each layer being 8 µm, and the total thickness of 16 µm. The screen used is a screen made of Tetoron, of 300 mesh/inch, with a strand diameter of 31 µm and openings of 38 µm.

In addition, the glossiness at 45° of the smoothing layer is 40. Further, the chromaticity-adjusting layer is formed by adding a pigment (purple) beforehand to the UV-hardening ink such that the chromaticity a* and b* at the surface of the base layer are 0.1 and -2.0, respectively, and screen printing this UV-hardening ink. The surface roughness Ra at the surface of the base layer is 0.05 µm. Finally, in the same manner as in Example 1, a printable layer is prepared by forming an ink-receiving layer on the surface of the base layer, and the information medium of Example 2 is prepared.

### (Example 3)

The information medium of Example 3 is prepared in the same manner as in Example 1, except that the ink-receiving layer is formed to a thickness of 45 µm.

### (Example 4)

The information medium of Example 4 is prepared in the same manner as in Example 2, except that the ink-receiving layer is formed to a thickness of 60 µm.

### (Example 5)

The information medium of Example 5 is prepared in the same manner as in Example 1, except that the surface roughness Ra at the surface of the base layer is 0.2 µm.

### (Comparative Example 1)

The information medium of Comparative Example 1 is prepared in the same manner as in Example 1, except that the ink-receiving layer is formed by screen printing a UV-hardening resin (UV SP 81019B, manufactured by Teikoku Printing Inks Mfg. Co., Ltd.) and hardening it by UV irradiation.

### (Comparative Example 2)

The information medium of Comparative Example 2 is prepared in the same manner as in Example 1, except that the base layer is formed to have a surface roughness Ra of 0.03 µm.

### (Comparative Example 3)

The information medium of Comparative Example 3 is prepared in the same manner as in Example 1, except that the ink-receiving layer is formed to a thickness of 20 µm.

### (Comparative Example 4)

The information medium of Comparative Example 4 is prepared in the same manner as in Example 2, except that the ink-receiving layer is formed to a thickness of 70 µm.

### <Evaluation of performance>

The following evaluations were performed on the information media obtained in Examples 1 to 5 and in Comparative Examples 1 to 4.

### (Printing)

Images were printed on the printable layers of the information media obtained in Examples 1 to 5 and in Comparative Examples 1 to 4, using an inkjet printer (PM-970C, manufactured by Seiko Epson Corporation).

### <Evaluation of image quality>

Next, for the information media obtained in Examples 1 to 5 and in Comparative Examples 1 to 4, a panel of 10 members performed an evaluation by visual observation on the printed images. The images were graded G1 when all of the ten members evaluated to be more vivid than conventional products, and G2 when the images were equal or poorer than conventional products. The results are presented in Table 1.

### <Evaluation of bleed>

On the printable layers of the information media of Examples 1 to 5 and Comparative Examples 1 to 4, a linear lattice pattern (line width 0.28 mm) was printed using the above-mentioned printer such that lines of magenta ink and lines of black ink were placed adjacently. After leaving the patterns for 3 hours, the line width of the black lines was measured and evaluated according to the following criteria. The results are presented in Table 1.

### <Criteria>

g1: Slight bleed over time was confirmed, but with no practical problems (line width: 0.31 to 0.35 mm).
g2: Obvious bleed over time was confirmed and caused practical problems (line width: 0.35 mm or greater).

**(Table 1)**

| | Thickness of ink-receiving layer (µm) | Surface roughness Ra of base layer (µm) | Bleed | Image quality | Notes |
|---|---|---|---|---|---|
| Example 1 | 30 | 0.1 | g1 | G1 | |
| Example 2 | 30 | 0.05 | g1 | G1 | |
| Example 3 | 45 | 0.1 | g1 | G1 | |
| Example 4 | 60 | 0.1 | g1 | G1 | |
| Example 5 | 30 | 0.2 | g1 | G1 | |
| Comparative Example 1 | 10 | 0.1 | g2 | G2 | |
| Comparative Example 2 | 30 | 0.03 | g1 | G2 | Peeling in ink-receiving layer |
| Comparative Example 3 | 20 | 0.1 | g2 | G2 | |
| Comparative Example 4 | 70 | 0.1 | g1 | G2 | Degradation of mechanical properties (warping, surface deflection) |

From Table 1, the information media of Examples 1 to 5 suffered little from bleed and were capable of high quality printing, whereas the information media of Comparative Examples 1 and 3 had serious bleed problems and presented a printing quality equal to that of conventional products. The information medium of Comparative Example 2 had no problem in bleed, but delamination of the ink-receiving layer occurred to cause serious deterioration in the image quality. The information medium of Comparative Example 4 had no problem in bleed and image quality but had deteriorated mechanical properties such as warping and surface deflection. Further, the information media of Examples 1 to 5 exhibited high resolution and fine texture, being also capable of vivid printing of a strand of hair. In contrast, the information media of Comparative Examples 1 to 4 presented poor printing quality with low resolution, and texture which was not fine.

## Claims

1. An information medium having a printable layer comprising at least a base layer and an ink-receiving layer adjacent to the base layer, **characterized in that** the surface roughness average Ra at the surface of the base layer is 0.05 µm or greater, and the ink-receiving layer is formed by thermally hardening a composition comprising a cation-modified acrylic copolymer, a polyvinylacetal resin, an epoxy compound and hydrophobic fine particles, the thickness of the ink-receiving layer being 30 µm to 60 µm.

2. The information medium according to claim 1, **characterized in that** the thickness of the ink-receiving layer is 35 µm to 55 µm.

3. The information medium according to claims 1 or 2, **characterized in that** the base layer comprises of two or more layers.

4. The information medium according to claims 1 through 3, **characterized in that** the thickness of the base layer is 0.1 µm to 100 µm.

5. The information medium according to claims 1 through 4, **characterized in that** the surface roughness average Ra at the surface of the base layer is 0.1 µm or greater.

6. The information medium according to claims 1 through 5, **characterized in that** the information medium is a magnetic medium, an optical medium or a semiconductor medium.

7. The information medium according to claims 1 or 2, **characterized in that** a monomer component of the cation-modified acrylic copolymer comprises at least one of methyl methacrylate, ethyl acrylate or acrylic monomer having a quaternary ammonium base.

8. The information medium according to claims 1 or 2, **characterized in that** the polyvinylacetal resin is prepared by acetalizing a polyvinyl alcohol having a degree of saponification of 70 to 90%, to a degree of 5 to 40 mol%.

9. The information medium according to claims 1 or 2, **characterized in that** the epoxy compound is a water-soluble aliphatic epoxy compound with at least bifunctionality.

10. The information medium according to claims 1 or 2, **characterized in that** the hydrophobic fine particles are made of a hydrophobic acrylic polymer, and the acrylic polymer comprises at least an alkyl (meth)acrylate as a monomer component.

11. The information medium according to claim 1, **characterized in that** a monomer component of the cation-modified acrylic copolymer comprises an acrylic monomer having a quaternary ammonium base and a hydrophobic monomer.

12. The information medium according to claim 1, **characterized in that** the information medium is an optical disk information recording medium.

13. The information medium according to claim 12, **characterized in that** the optical disk information recording medium comprises a substrate, a recording layer, a light-reflecting layer and a protective layer.

14. The information medium according to claim 13, **characterized in that** the thickness of the substrate is in a range of 0.5 to 1.2 mm.

## Patentansprüche

1. Informationsmedium mit einer bedruckbaren Schicht, umfassend wenigstens eine Basisschicht und eine tintenaufnehmende Schicht, die zur Basisschicht benachbart ist, **dadurch gekennzeichnet, daß** der Oberflächenmittenrauwert Ra an der Oberfläche der Basisschicht 0,05 µm oder größer ist und die tintenaufnehmende Schicht durch thermische Härtung einer Zusammensetzung gebildet ist, die ein kationisch modifiziertes Acrylcopolymer, ein Polyvinylacetalharz, eine Epoxyverbindung und hydrophobe feine Teilchen umfaßt, wobei die Dicke der tintenaufnehmenden Schicht 30 bis 60 µm beträgt.

2. Informationsmedium gemäß Anspruch 1, **dadurch gekennzeichnet, daß** die Dicke der tintenaufnehmenden Schicht 35 bis 55 µm beträgt.

3. Informationsmedium gemäß Anspruch 1 oder 2, **dadurch gekennzeichnet, daß** die Basisschicht zwei oder mehr Schichten umfaßt.

4. Informationsmedium gemäß Ansprüchen 1 bis 3, **dadurch gekennzeichnet, daß** die Dicke der Basisschicht 0,1 bis 100 µm beträgt.

5. Informationsmedium gemäß Ansprüchen 1 bis 4, **dadurch gekennzeichnet, daß** der Oberflächenmittenrauwert Ra an der Oberfläche der Basisschicht 0,1 µm oder größer ist.

6. Informationsmedium gemäß Ansprüchen 1 bis 5, **dadurch gekennzeichnet, daß** das Informationsmedium ein magnetisches Medium, ein optisches Medium oder ein Halbleitermedium ist.

7. Informationsmedium gemäß Anspruch 1 oder 2, **dadurch gekennzeichnet, daß** eine Monomerkomponente des kationisch modifizierten Acrylcopolymers wenigstens eines aus Methylmethacrylat, Ethylacrylat oder Acrylmonomer mit einer quaternären Ammoniumbase umfaßt.

8. Informationsmedium gemäß Anspruch 1 oder 2, **dadurch gekennzeichnet, daß** das Polyvinylacetalharz durch Acetalisieren eines Polyvinylalkohols mit einem Verseifungsgrad von 70 bis 90 % auf einen Grad von 5 bis 40 mol% hergestellt wird.

9. Informationsmedium gemäß Anspruch 1 oder 2, **dadurch gekennzeichnet, daß** die Epoxyverbindung eine wasserlösliche aliphatische Epoxyverbindung mit wenigstens Bifunktionalität ist.

10. Informationsmedium gemäß Anspruch 1 oder 2, **dadurch gekennzeichnet, daß** die hydrophoben feinen Teilchen aus einem hydrophoben Acrylpolymer hergestellt sind und das Acrylpolymer wenigstens ein Alkyl(meth)acrylat als Monomerkomponente umfaßt.

11. Informationsmedium gemäß Anspruch 1, **dadurch gekennzeichnet, daß** eine Monomerkomponente des kationisch modifizierten Acrylcopolymers ein Acrylmonomer mit einer quaternären Ammoniumbase und ein hydrophobes Monomer umfaßt.

12. Informationsmedium gemäß Anspruch 1, **dadurch gekennzeichnet, daß** das Informationsmedium ein Bildplatten-Informationsaufzeichnungsmedium ist.

13. Informationsmedium gemäß Anspruch 12, **dadurch gekennzeichnet, daß** das Bildplatten-Informationsaufzeichnungsmedium ein Substrat, eine Aufzeichnungsschicht, eine lichtreflektierende Schicht und eine Schutzschicht umfaßt.

14. Informationsmedium gemäß Anspruch 13, **dadurch gekennzeichnet, daß** die Dicke des Substrats in einem Bereich von 0,5 bis 1,2 mm ist.

## Revendications

1. Support d'informations ayant une couche imprimable comprenant au moins une couche de base et une couché de réception d'encre adjacente à la couche de base, **caractérisé en ce que** la rugosité de surface moyenne Ra au niveau de la surface de la couche de base est de 0,05 µm ou supérieure, et la couche de réception d'encre est formée en durcissant thermiquement une composition comprenant un copolymère acrylique modifié par cations, une résine poly(vinyle) acétal, un composé époxy et de fines particules hydrophobes, l'épaisseur de la couche de réception d'encre étant de 30 µm à 60 µm.

2. Support d'informations selon la revendication 1, **caractérisé en ce que** l'épaisseur de la couche de réception d'encre est de 35 µm à 55 µm.

3. Support d'informations selon la revendication 1 ou 2, **caractérisé en ce que en ce que** la couche de base comprend deux couches ou plus.

4. Support d'informations selon les revendications 1 à 3, **caractérisé en ce que** l'épaisseur de la couche de base est de 0,1 µm à 100 µm.

5. Support d'informations selon les revendications 1 à 4, **caractérisé en ce que** la rugosité de surface moyenne Ra à la surface de la couche de base est de 0,1 µm ou supérieure.

6. Support d'informations selon les revendications 1 à 5, **caractérisé en ce que** le support d'informations est un support magnétique, un support optique ou un support semiconducteur.

7. Support d'informations selon la revendication 1 ou 2, **caractérisé en ce qu'**un composant monomère du copolymère acrylique modifié par cations comprend au moins l'un parmi le méthacrylate de méthyle, l'acrylate d'éthyle ou un monomère acrylique ayant une base ammonium quaternaire.

8. Support d'informations selon la revendication 1 ou 2, **caractérisé en ce que** la résine poly(vinyle) acétal est préparée en acétilant un poly(alcool vinylique) ayant un degré de saponification de 70 à 90 %, à un degré de 5 à 40 % en mol.

9. Support d'informations selon la revendication 1 ou 2, **caractérisé en ce que** le composé époxy est un composé époxy aliphatique soluble dans l'eau ayant au moins une bifonctionnalité.

10. Support d'informations selon la revendication 1 ou 2, **caractérisé en ce que** les fines particules hydrophobes sont constituées d'un polymère acrylique hydrophobe, et le polymère acrylique comprend au moins un (méth)acrylate d'alkyle en tant que composant monomère.

11. Support d'informations selon la revendication 1, **caractérisé en ce qu'**un composant monomère du copolymère acrylique modifié par cations comprend un monomère acrylique ayant une base ammonium quaternaire et un monomère hydrophobe.

12. Support d'informations selon la revendication 1, **caractérisé en ce que** le support d'informations est un support d'enregistrement d'informations sur disque optique.

13. Support d'informations selon la revendication 12, **caractérisé en ce que** le support d'enregistrement d'informations sur disque optique comprend un substrat, une couche d'enregistrement, une couche réfléchissant la lumière et une couche protectrice.

14. Support d'informations selon la revendication 13, **caractérisé en ce que** l'épaisseur du substrat est dans une gamme de 0,5 à 1,2 mm.
